# EUROPÄISCHE PATENTSCHRIFT

(11) **EP 3 156 686 B1**
(45) Veröffentlichungstag und Bekanntmachung des Hinweises auf die Patenterteilung: **15.04.2020**
(21) Anmeldenummer: 15189374.0
(22) Anmeldetag: 12.10.2015
(51) Int. Cl.: F16F 13/10

(54) **HYDROLAGER, INSBESONDERE ZUR LAGERUNG EINES KRAFTFAHRZEUGMOTORS**
HYDRAULIC MOUNT, IN PARTICULAR FOR THE SUSPENSION OF A MOTOR VEHICLE ENGINE
SUPPORT HYDRAULIQUE, EN PARTICULIER DESTINÉ AU LOGEMENT D'UN MOTEUR DE VEHICULE AUTOMOBILE

(43) Veröffentlichungstag der Anmeldung: 19.04.2017
(73) Patentinhaber: Vibracoustic AG, 64293 Darmstadt (DE)
(72) Erfinder: Schemer, Thomas, 69469 Weinheim (DE); Stöcker, Timo, 69502 Hemsbach (DE)
(74) Vertreter: Flügel Preissner Schober Seidel

(56) Entgegenhaltungen:
- EP-A1- 0 737 825
- EP-A2- 0 142 943
- US-A- 4 901 986

## Beschreibung

Die vorliegende Erfindung betrifft ein Hydrolager, insbesondere zur Lagerung eines Kraftfahrzeugmotors, mit einer Tragfeder aus einem elastomeren Werkstoff zur Abstützung eines Lagerkerns, einer Arbeitskammer, die von der Tragfeder begrenzt ist, einer Ausgleichskammer, die durch eine Zwischenplatte von der Arbeitskammer getrennt und durch eine Ausgleichsmembran aus elastomeren Werkstoff begrenzt ist, wobei die Arbeitskammer und die Ausgleichskammer mit einer hydraulischen Flüssigkeit gefüllt und durch einen Dämpfungskanal miteinander verbunden sind, wobei die Zwischenplatte in einer elastischen Aufnahmeeinrichtung gelagert ist, die die Zwischenplatte umgreift und einen schwenkbaren Abstützbereich aufweist. Weiterhin betrifft die Erfindung ein Verfahren zur Montage einer Zwischenplatte in einem topfförmigen Deckel oder in einem Gehäuse eines derartigen Hydrolagers.

Derartige hydraulisch dämpfende Lager werden insbesondere zur Abstützung eines Kraftfahrzeugmotors an einer Fahrzeugkarosserie verwendet, um einerseits die von Fahrbahnunebenheiten hervorgerufenen Schwingungen zu dämpfen und andererseits akustische Schwingungen zu isolieren. Die von den Fahrbahnunebenheiten hervorgerufenen Schwingungen werden durch ein hydraulisches System gedämpft, wobei das hydraulische System durch die flüssigkeitsgefüllte Arbeitskammer, die Ausgleichskammer und den die beiden Kammern miteinander verbindenden Dämpfungskanal gebildet wird. Die Funktionsweise des hydraulischen Systems kann wie folgt beschrieben werden. Die Arbeitskammer wird durch eine Bewegung der Tragfeder vergrößert wder verkleinert, wobei die in der Arbeitskammer befindliche Flüssigkeit über den Dämpfungskanal in die Ausgleichskammer gedrückt wird. Die im Dämpfungskanal schwingende Flüssigkeit bewirkt eine Dämpfung.

Derartige Hydrolager neigen dazu, in hochfrequenten Bereichen dynamisch stark zu verhärten, was zu akustischen Beeinträchtigungen führen kann. Als Abhilfe können Tilger dienen, die man im Fahrzeug oder im Lager einbaut.

Aus US 4,901,986 A, die als nächstliegender Stand der Technik betrachtet ist, ist ein Hydrolager bekannt, welches eine Trennplatte aufweist, die in einem ringförmigen Randbereich gelagert ist. Der ringförmige Randbereich ist Teil einer Ausgleichsmembran und umgreift die Trennplatte. Schultern des Randbereich sind flexibel ausgebildet.

Ausgehend hiervon liegt der Erfindung die Aufgabe zugrunde, bei einem Hydrolager der eingangs genannten Art die Dämpfungseigenschaften im Hochfrequenzbereich bei einfachem Aufbau und einfacher Montage zu verbessern.

Zur Lösung dieser Aufgabe wird bei einem Hydrolager der eingangs genannten Art erfindungsgemäß vorgeschlagen, dass die Aufnahmeeinrichtung in Axialrichtung abragende Vorsprünge aufweist, die in Umfangsrichtung versetzt zueinander angeordnet sind.

Bei dem erfindungsgemäßen Hydrolager ist die Zwischenplatte im eingebauten Zustand randseitig vollständig von der elastischen Aufnahmeeinrichtung eingefaßt. Durch die weiche Lagerung der Zwischenplatte wirkt die Zwischenplatte als Tilger und kann die auftretenden hochfrequenten Schwingungen tilgen. Darüber hinaus ist die Zwischenplatte gegenüber dem Gehäuse vollständig entkoppelt, so dass die auftretenden Schwingungen isoliert werden. Durch den schwenkbar angeordneten Abstützbereich kann die Aufnahmeeinrichtung eine Hinterschneidung aufweisen, die zu einer vollständigen Einfassung der Zwischenplatte in der Schließstellung der Aufnahmeeinrichtung führt.

Vorteilhafte Ausgestaltungen der Erfindung sind Gegenstand der abhängigen Ansprüche.

Vorteilhaft ist die Aufnahmeeinrichtung ringförmig ausgebildet. Hierbei sind die Abmessungen der Aufnahmeeinrichtung an die Außenabmessung der Zwischenplatte angepaßt.

Die Aufnahmeeinrichtung kann eine Ringnut aufweisen, die einen radial abragenden Ringbund der Zwischenplatte aufnimmt. In der Schließstellung der elastischen Aufnahmeeinrichtung wird der Ringbund von den Abstützbereichen der Aufnahmeeinrichtung eingefaßt.

Vorteilhaft weist die Aufnahmeeinrichtung einen ersten Abstützbereich und eine zweiten Abstützbereich auf, die zueinander schwenkbeweglich angeordnet sind.

Erfindungsgemäß weist die Aufnahmeeinrichtung in Axialrichtung abragende Vorsprünge auf, die in Umfangsrichtung versetzt zueinander angeordnet sind. Mit den Vorsprüngen kann die Steifigkeit der elastischen Aufnahmeeinrichtung in einfacher Weise eingestellt werden. Dabei können die Vorsprüng an beiden Abstützbereichen vorgesehen sein.

Bei einer vorteilhaften Ausführungsform ist die Aufnahmeeinrichtung einteilig mit der Ausgleichsmembran ausgebildet. Hierdurch wird der Aufbau des Hydrolagers vereinfacht.

Die Aufnahmeeinrichtung und die Ausgleichsmembran können als einteiliges Vulkanisationsteil aus einem elastomeren Material hergestellt sein.

Vorteilhaft ist die Ausgleichsmembran in einem topfförmigen Deckel aufgenommen, der einen radial abgesetzten Randbereich zur Aufnahme der Aufnahmeeinrichtung aufweist.

Um eine weitestgehende Entkopplung zu erzielen, ist der Stirnbereich des Deckels von einen radialen Ansatz der elastischen Aufnahmeeinrichtung abgedeckt.

Vorteilhaft ist die Tragfeder an einer Stützeinrichtung anvulkanisiert, die einen an dem Deckel festgelegten Befestigungsbereich aufweist. Hierbei kann die Befestigung beispielsweise durch Umbördeln der Stützbereiches an dem Deckel erfolgen.

Vorteilhaft weist das Hydrolager ein die Tragfeder aufnehmendes Gehäuse auf.

Weiterhin betrifft die Erfindung ein Verfahren zur Montage einer Zwischenplatte in einem topfförmigen Deckel oder in einem Gehäuse eines Hydrolagers nach einem der voranstehenden Ansprüche. Das Verfahren weist folgende Schritte auf:
a) Bereitstellen eines Topfes oder eines Gehäuses zur Aufnahme der elastischen Aufnahmeeinrichtung;
b) Einsetzen der Zwischenplatte in die geöffnete Aufnahmeeinrichtung, wobei die Zwischenplatte auf einem ersten Abstützbereich der Aufnahmeeinrichtung aufliegt;
c) Eindrücken der Zwischenplatte und der Ausgleichsmembran in den Deckel oder das Gehäuse, wobei der zweite Abstützbereich der Aufnahmeeinrichtung nach innen schwenkt und die Zwischenplatte umgreift.

In der Schließstellung der Aufnahmeeinrichtung ist somit der Randbereich der Zwischenplatte vollständig von der Aufnahmeeinrichtung eingefaßt. Hierdurch wird eine weiche Lagerung der Zwischenplatte erzielt, wodurch eine Tilgerfunktion bereitgestellt wird. Darüber hinaus wird die Zwischenplatte von einem topfförmigen Deckel oder einem Gehäuse vollständig entkoppelt beziehungsweise ist isoliert.

Nachfolgend wird die Erfindung anhand eines Ausführungsbeispiels näher beschrieben, das in den Zeichnungen schematisch dargestellt ist. Hierbei zeigen:
- Fig. 1: einen Vertikalschnitt durch ein erfindungsgemäßes Hydrolager;
- Fig. 2: eine perspsektivische Ansicht der Aufnahmeeinrichtung mit integrierter Ausgleichemembran;
- Fig. 3: einen Vertikaklschnitt durch die Aufnahmeeinrichtung in deren Offenstellung;
- Fig. 4: einen Vertikaklschnitt durch die Aufnahmeeinrichtung in deren Schließstellung und
- Fig. 5: einen Vertikaklschnitt durch die Zwischenplatte und die Aufnahmeeinrichtung in Offenstellung und in Schließstellung der Aufnahmeeinrichtung.

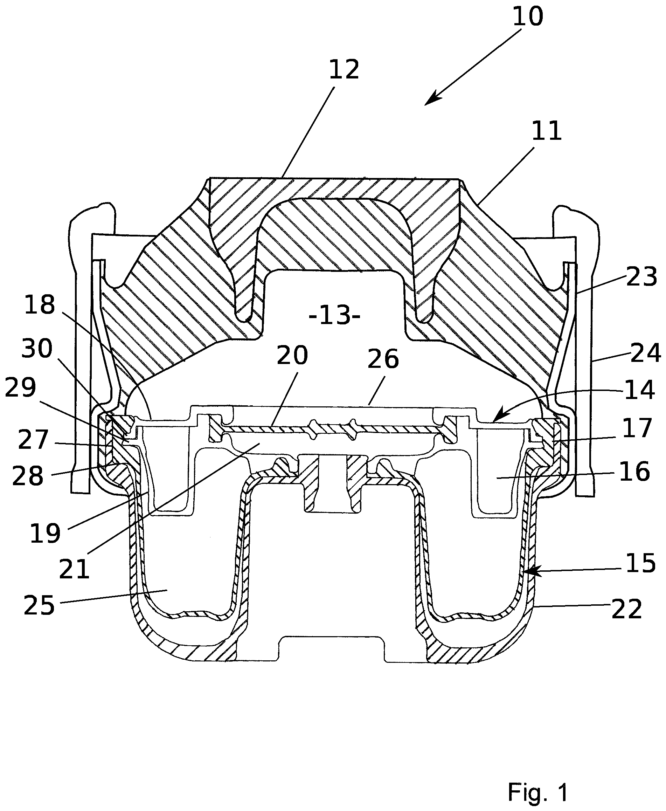

Fig. 1 zeigt ein Hydrolager 10 zur Lagerung eines nicht dargestellten Kraftfahrzeugmotors an einer nicht dargestellten Fahrzeugkarosserie. Das Hydrolager 10 weist eine Tragfeder 11 aus einem elastomeren Werkstoff zur Abstützung eines einvulkanisierten Lagerkerns 12 auf. An dem Lagerkern 12 ist der Motor befestigt.

Die Tragfeder 11 begrenzt eine Arbeitskammer 13, die mittels einer Zwischenplatte 14 von einer Ausgleichskammer 25 getrennt ist. Die Ausgleichskammer 25 wird von einer Ausgleichsmembran 15, die auch als Rollbalg bezeichnet wird, begrenzt. Die Kammern 13 und 25 sind mit einer hydraulischen Flüssigkeit befüllt und über einen in der Zwischenplatte 14 eingebrachten Dämpfungskanal 16 miteinander verbunden.

Die Zwischenplatte 14 weist ein Deckelteil 18 und ein Bodenteil 15 auf, in dem der Dämpfungskanal 16 eingeformt ist. Das Deckelteil 18 und das Bodenteil 19 sind aus Kunststoff hergestellt. In der Zwischenplatte 21 ist eine Entkopplungskammer 21 vorgesehen, in der eine Entkopplungsmembran 20 aufgenommen ist. Die Entkopplungskammer 21 steht über eine Öffnung 26 mit der Arbeitskammer 13 in Verbindung.

Die Ausgleichsmembran 15 weist eine Aufnahmeeinrichtung 17 auf, die einteilig mit der Ausgleichsmembran 15 ausgebildet ist. Die Ausgleichsmembran 15 ist als einteiliges Vulkanisationsteil aus einem elastomeren Werkstoff hergestellt.

Von der Zwischenplatte 14 ragt radial ein Ringbund 29 ab, der in einer Ringnut 30 der Aufnahmeeinrichtung 17 aufgenommen ist.

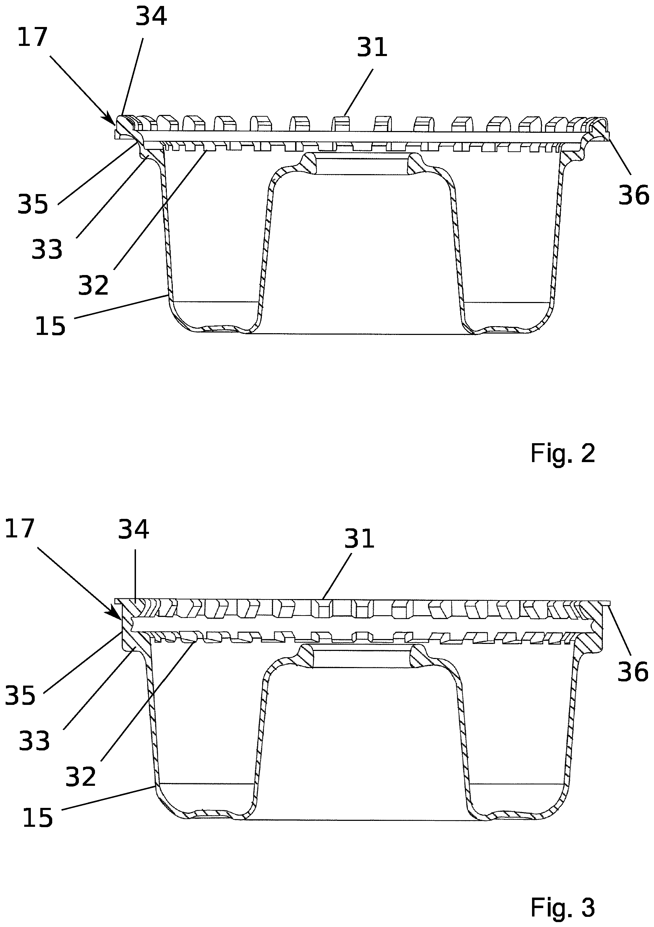

Die detaillierte Ausgestaltung der Aufnahmeeinrichtung 17 wird nachfolgend anhand der Figuren 2 bis 4 beschriegen.

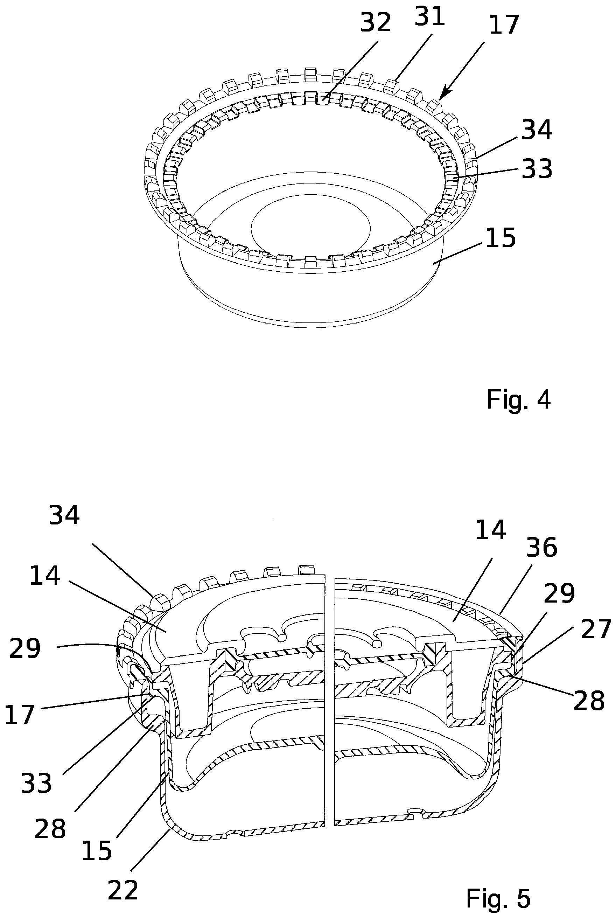

Fig. 2 und 4 zeigt die Aufnahmeeinrichtung 17 mit integrierter Ausgleichsmembran 15 in der Offenstellung der Aufnahmeeinrichtung 17. Die Aufnahmeeinrichtung 17 ist ringförmig ausgebildet und weist in Umfangsrichtung versetzt angeordnete Vorsprünge 31 und 32 auf, die in Axialrichtung abragen. Die Vorsprünge 31, 32 bewirken eine besonders weiche Lagerung der Zwischenplatte 14, wobei die Steifigkeit über die Ausgestaltung der Vorsprünge, insbesondere deren Anzahl, einstellbar ist.

Die Ausgleichsmembran 15, die als Rollbalg ausgebildet ist, ist einstückig an die Aufnahmeeinrichtung 17 anvulkanisiert.

Die Aufnahmeeinrichtung 17 weist einen ersten Abstützbereich 33 auf, der über einen Verbindungsbereich 35 mit einem zweiten Abstützbereich 34 verbunden ist. Von dem ersten Abstützbereich 33 ragen die Vorsprünge 32 und von dem zweiten Abstützbereich 34 die Vorsprünge 31 jeweils in Axialrichtung ab. An der offen Stirnseite ragt ein radialer Ansatz 36 ab.

Fig. 3 zeigt die Aufnahmeeinrichtung 17 in ihrer Schließstellung. In dieser Stellung ist der schwenkbeweglich angeordnete zweite Abstützbereich 34 radial nach innen verschwenkt. Hierdurch wird an der Abstützeinrichtung 17 eine Ringnut 30 ausgebildet, die den nicht dargestellten Ringbund 29 der Zwischenplatte aufnimmt.

Anhand von Fig. 5 soll die Montage der Zwischenplatte an dem topfförmigen Deckel 22 beschrieben werden. Dabei zeigt die linke Hälfte der Fig. 5 die Einbausituation in der Offenstellung der Aufnahmeeinrichtung 17, wohingegen die rechte Hälfte der Fig. 5 die Einbausituation der Aufnahmeeinrichtung 17 in ihrer Schließstellung zeigt.

Zunächst wird die Aufnahmeeinrichtung 17 mit anvulkanisierter Ausgleichsmembran 15 in den topfförmigen Deckel 22 eingelegt. Dabei ist der schwenkbeweglich angeordnete zweite Abstützbereich 34 nach außen geklappt. Der erste Abstützbereich 33 ist mit Abstand zu der Schulter 28 des Deckels 22 positioniert.

Die rechte Darstellung der Fig. 5 zeigt die Aufnahmeeinrichtung 17 in ihrer Schließstellung. Beim Herunterdrücken der Zwischenplatte 14 in den topfförmigen Deckel 22 liegt der erste Abstützbereich 33 auf der Schulter 28 des Deckels 22 auf. Der Randbereich 27 schwenkt den zweiten Abstützbereich 34 der Aufnahmeeinrichtung 17 beim Herunterdrücken der Zwischenplatte 14 nach innen. Hierdurch wird die Zwischenplatte 14 von dem schwenkbeweglich angeordneten zweiten Abstützbereich 34 umgriffen.

Somit wird der Randbereich der Zwischenplatte 14 vollständig von der Abstützeinrichtung 17 eingefaßt. In der Schließstellung liegt der radiale Ansatz 36 der Abstützeinrichtung 17 auf der Stirnseite des Ranbereiches 27 auf.

Die elastische Aufnahmeeinrichtung 17 bewirkt eine weiche Lagerung der Zwischenplatte 14 in dem Hydrolager 10. Hierdurch wird eine Tilgerfunktion der Zwischenplatte erzielt, durch die hochfrequente Schwingungen getilgt werden können. Darüber hinaus bewirkt die elastische Aufnahmeeinrichtung eine vollständige Entkopplung der Zwischenplatte 14, wodurch auftretende Schwingungen isoliert werden können.

Da die Aufnahmeeinrichtung 17 als einteiliges Vulkanisationsteil mit der Ausgleichsmembran 15 hergestellt ist, ist die Herstellung und Montage besonders einfache. Die Montage kann automatisiert durchgeführt werden.

### Bezugszeichenliste

- 10: Hydrolager
- 11: Tragfeder
- 12: Lagerkern
- 13: Arbeitskammer
- 14: Zwischenplatte
- 15: Ausgleichsmembran
- 16: Dämpfungskanal
- 17: Aufnahmeeinrichtung
- 18: Deckelteil
- 19: Deckelteil
- 20: Entkopplungsmembran
- 21: Entkopplungskammer
- 22: Deckel
- 23: Stützeinrichtung
- 24: Gehäuse
- 25: Ausgleichskammer
- 26: Öffnung
- 27: Randbereich
- 28: Schulter
- 29: Ringbund
- 30: Ringnut
- 31: Vorsprung
- 32: Vorsprung
- 33: Erster Abstützbereich
- 34: Zweiter Abstützbereich
- 35: Verbindungsbund
- 36: Radialer Ansatz

## Patentansprüche

1. Hydrolager (10), insbesondere zur Lagerung eines Kraftfahrzeugmotors, mit einer Tragfeder (11) aus einem elastomeren Werkstoff zur Abstützung eines Lagerkerns (12), einer Arbeitskammer (13), die von der Tragfeder (11) begrenzt ist, einer Ausgleichskammer (25), die durch eine Zwischenplatte (14) von der Arbeitskammer (13) getrennt und durch eine Ausgleichsmembran (15) aus elastomerem Werkstoff begrenzt ist, wobei die Arbeitskammer (13) und die Ausgleichskammer (25) mit einer hydraulischen Flüssigkeit gefüllt und durch einen Dämpfungskanal (16) miteinander verbunden sind, wobei die Zwischenplatte (14) in einer elastischen Aufnahmeeinrichtung (17) gelagert ist, die die Zwischenplatte (14) umgreift und einen schwenkbaren Abstützbereich (34) aufweist, **dadurch gekennzeichnet, dass** die Aufnahmeeinrichtung (17) in Axialrichtung abragende Vorsprünge (31, 32) aufweist, die in Umfangsrichtung versetzt zueinander angeordnet sind.

2. Hydrolager (10) nach Anspruch 1, **dadurch gekennzeichnet, dass** die Aufnahmeeinrichtung (17) ringförmig ausgebildet ist.

3. Hydrolager (10) nach Anspruch 1 oder 2, **dadurch gekennzeichnet, dass** die Aufnahmeeinrichtung (17) eine Ringnut (30) aufweist, die einen radial abragenden Ringbund (29) der Zwischenplatte (14) aufnimmt.

4. Hydrolager (10) nach Anspruch 1 oder 2, **dadurch gekennzeichnet, dass** die Aufnahmeeinrichtung (17) einen ersten Abstützbereich (33) und einen zweiten Abstützbereich (34) aufweist, die zueinander schwenkbeweglich angeordnet sind.

5. Hydrolager (10) nach einem der vorhergehenden Ansprüche, **dadurch gekennzeichnet, dass** die Aufnahmeeinrichtung (17) einteilig mit der Ausgleichmembran (15) ausgebildet ist.

6. Hydrolager (10) nach Anspruch 5, **dadurch gekennzeichnet, dass** die Aufnahmeeinrichtung (17) und die Ausgleichsmembran (15) als einteiliges Vulkanisationsteil aus einem elastomeren Material hergestellt sind

7. Hydrolager (10) nach einem der vorhergehenden Ansprüche, **dadurch gekennzeichnet, dass** die Ausgleichsmembran (15) in einem topfförmigen Deckel (22) aufgenommen ist, der einen radial abgesetzten Randbereich (27) zur Aufnahme der Aufnahmeeinrichtung (17) aufweist.

8. Hydrolager (10) nach einem der vorgehenden Ansprüche, **dadurch gekennzeichnet, dass** ein Stirnbereich des Deckels (22) von einem radialen Ansatz (36) der elastischen Aufnahmeeinrichtung (17) abgedeckt ist.

9. Hydrolager(10) nach einem der vorgehenden Ansprüche, **dadurch gekennzeichnet, dass** die Tragfeder (11) an einer Stützeinrichtung (23) anvulkanisiert ist, die einen an dem Deckel (22) festgelegten Befestigungsbereich aufweist.

10. Hydrolager (10) nach einem der vorgehenden Ansprüche, **dadurch gekennzeichnet, dass** das Hydrolager (10) ein die Tragfeder (11) aufnehmendes Gehäuse (24) aufweist.

11. Verfahren zur Montage einer Zwischenplatte (14) in einem topfförmigen Deckel (22) oder in einem Gehäuse (24) eines Hydrolagers (10) nach einem der voranstehenden Ansprüche bestehend aus den Schritten:
a) Bereitstellen eines Deckels (22) oder eines Gehäuses (24) zur Aufnahme der elastischen Aufnahmeeinrichtung (17);
b) Einsetzen der Zwischenplatte (14) in die geöffnete Aufnahmeeinrichtung (17), wobei die Zwischenplatte (14) auf einem ersten Abstützbereich (33, 34) der Aufnahmeeinrichtung (17) aufliegt;
c) Eindrücken der Zwischenplatte (14) und der Ausgleichsmembran (15) in den Deckel (22) oder das Gehäuse (24), wobei der zweite Abstützbereich (34) der Aufnahmeeinrichtung (17) nach innen schwenkt und die Zwischenplatte (14) umgreift.

## Claims

1. Hydraulic mount (10), in particular for supporting a motor vehicle engine, having a suspension spring (11) made of an elastomeric material to support a mounting core (12), a working chamber (13), which is defined by the suspension spring (11), a compensation chamber (25), which is separated by an intermediate plate (14) from the working chamber (13) and enclosed by a compensating diaphragm (15) of elastomeric material, the working chamber (13) and the compensation chamber (25) being filled with a hydraulic fluid and interconnected by a damping channel (16), the intermediate plate (14) being mounted in an elastic receiving device (17) which encompasses the intermediate plate (14) and has a pivotable support area (34), **characterised in that** the receiving device (17) has projections (31, 32) projecting in the axial direction which are arranged offset to each other in the circumferential direction.

2. Hydraulic mount (10) according to claim 1, **characterised in that** the receiving device (17) has an annular design.

3. Hydraulic mount (10) according to claim 1 or 2, **characterised in that** the receiving device (17) has an annular groove (30) which receives a radially projecting annular collar (29) of the intermediate plate (14).

4. Hydraulic mount (10) according to claim 1 or 2, **characterised in that** the receiving device (17) has a first support region (33) and a second support region (34) which are arranged so as to be pivotable relative to one another.

5. Hydraulic mount (10) according to one of the preceding claims, **characterised in that** the receiving device (17) is formed in one piece with the compensating diaphragm (15).

6. Hydraulic mount (10) according to claim 5, **characterised in that** the receiving device (17) and the compensating diaphragm (15) are made of an elastomeric material as a one-piece vulcanization part.

7. Hydraulic mount (10) according to one of the preceding claims, **characterised in that** the compensating diaphragm (15) is received in a cup-shaped cover (22) which has a radially offset edge region (27) for receiving the receiving device (17).

8. Hydraulic mount (10) according to one of the preceding claims, **characterised in that** a front region of the cover (22) is covered by a radial projection (36) of the elastic receiving device (17).

9. Hydraulic mount (10) according to one of the preceding claims, **characterised in that** the suspension spring (11) is vulcanised onto a support device (23) which has a fastening region fixed to the cover (22).

10. Hydraulic mount (10) according to one of the preceding claims, **characterised in that** the hydraulic mount (10) has a housing (24) receiving the suspension spring (11).

11. Method for mounting an intermediate plate (14) in a cup-shaped cover (22) or in a housing (24) of a hydraulic mount (10) according to one of the preceding claims consisting of the steps:
a) providing a cover (22) or a housing (24) for receiving the elastic receiving device (17);
b) inserting the intermediate plate (14) into the opened receiving device (17), wherein the intermediate plate (14) rests on a first support region (33, 34) of the receiving device (17);
c) pressing the intermediate plate (14) and the compensating diaphragm (15) into the cover (22) or the housing (24), the second support region (34) of the receiving device (17) pivoting inwards and embracing the intermediate plate (14).

## Revendications

1. Support hydraulique (10), destiné en particulier à monter un moteur de véhicule automobile, comportant un ressort porteur (11) en un matériau élastomère pour soutenir un noyau de support (12), une chambre de travail (13) délimitée par le ressort porteur (11), une chambre de compensation (25) qui est séparée de la chambre de travail (13) par une plaque intermédiaire (14) et qui est délimitée par une membrane de compensation (15) en matériau élastomère,
dans lequel
la chambre de travail (13) et la chambre de compensation (25) sont remplies d'un liquide hydraulique et reliées l'une à l'autre par un canal d'atténuation (16),
la plaque intermédiaire (14) est montée dans un dispositif de réception élastique (17) qui enserre la plaque intermédiaire (14) et qui présente une zone de soutien (34) mobile en basculement,
**caractérisé en ce que**
le dispositif de réception (17) présente des saillies (31, 32) dépassant en direction axiale et disposées en décalage en direction périphérique les unes par rapport aux autres.

2. Support hydraulique (10) selon la revendication 1,
**caractérisé en ce que**
le dispositif de réception (17) est réalisé en forme annulaire.

3. Support hydraulique (10) selon la revendication 1 ou 2,
**caractérisé en ce que**
le dispositif de réception (17) présente une rainure annulaire (30) qui reçoit une collerette annulaire (29) radialement en saillie de la plaque intermédiaire (14).

4. Support hydraulique (10) selon la revendication 1 ou 2,
**caractérisé en ce que**
le dispositif de réception (17) comprend une première zone de soutien (33) et une seconde zone de soutien (34) qui sont disposées de façon mobile en basculement l'une par rapport à l'autre.

5. Support hydraulique (10) selon l'une des revendications précédentes,
**caractérisé en ce que**
le dispositif de réception (17) est réalisé d'un seul tenant avec la membrane de compensation (15).

6. Support hydraulique (10) selon la revendication 5,
**caractérisé en ce que**
le dispositif de réception (17) et la membrane de compensation (15) sont réalisés sous la forme d'une pièce vulcanisée d'un seul tenant en un matériau élastomère.

7. Support hydraulique (10) selon l'une des revendications précédentes,
**caractérisé en ce que**
la membrane de compensation (15) est reçue dans un couvercle (22) en forme de pot qui comprend une zone de bord (27) radialement en retrait et destinée à recevoir le dispositif de réception (17).

8. Support hydraulique (10) selon l'une des revendications précédentes,
**caractérisé en ce que**
une zone frontale du couvercle (22) est recouverte par un talon radial (36) du dispositif de réception élastique (17).

9. Support hydraulique (10) selon l'une des revendications précédentes,
**caractérisé en ce que**
le ressort porteur (11) est vulcanisé sur un dispositif de soutien (23) qui présente une zone de fixation immobilisée sur le couvercle (22).

10. Support hydraulique (10) selon l'une des revendications précédentes,
**caractérisé en ce que**
le support hydraulique (10) comprend un boîtier (24) recevant le ressort porteur (11).

11. Procédé pour monter une plaque intermédiaire (14) dans un couvercle (22) en forme de pot ou dans un boîtier (24) d'un support hydraulique (10) selon l'une des revendications précédentes, comportant les étapes consistant à :
a) fournir un couvercle (22) ou un boîtier (24) pour recevoir le dispositif de réception élastique (17) ;
b) mettre en place la plaque intermédiaire (14) dans le dispositif de réception (17) ouvert, la plaque intermédiaire (14) reposant sur une première zone de soutien (33, 34) du dispositif de réception (17) ;
c) enfoncer la plaque intermédiaire (14) et la membrane de compensation (15) dans le couvercle (22) ou dans le boîtier (24), la seconde zone de soutien (34) du dispositif de réception (17) basculant vers l'intérieur et enserrant la plaque intermédiaire (14).
